# EUROPÄISCHE PATENTSCHRIFT

(11) **EP 3 833 556 B1**
(45) Veröffentlichungstag und Bekanntmachung des Hinweises auf die Patenterteilung: **04.05.2022**
(21) Anmeldenummer: 19762084.2
(22) Anmeldetag: 05.08.2019
(51) Int. Cl.: B60D 1/60, B62D 53/08

(54) **SCHMUTZDECKELANORDNUNG SOWIE SCHMUTZDECKELVORRICHTUNG FÜR DIESE ANORDNUNG**
DUST CAP ASSEMBLY AND DUST CAP DEVICE FOR THIS ASSEMBLY
ASSEMBLAGE DE COUVERCLE DE PROTECTION AINSI QUE DISPOSITIF DE COUVERCLE DE PROTECTION POUR CET ASSEMBLAGE

(30) Priorität: 07.08.2018 DE 202018104542 U
(43) Veröffentlichungstag der Anmeldung: 16.06.2021
(73) Patentinhaber: Hamburger Patent Schmiede GmbH, 21244 Buchholz (DE)
(72) Erfinder: METTERNICH, Heinz-Rüdiger, 21279 Eversen-Heide (DE)
(74) Vertreter: Hansen, Jochen
(86) Internationale Anmeldenummer: PCT/DE2019/100708
(87) Internationale Veröffentlichungsnummer: WO 2020/030225

(56) Entgegenhaltungen:
- EP-A2- 1 240 067
- DE-A1-102006 033 899
- DE-A1-102008 001 349
- DE-U1-202017 101 339

## Beschreibung

Die Erfindung betrifft eine Schmutzdeckelanordnung mit einem Sattelauflieger und einem Zugfahrzeug zum Verschließen eines für eine automatische Sattelkupplung mit einer Bohrung hohlgebohrten Königszapfens, der an der als Gegenlager für eine Sattelplatte des Zugfahrzeugs dienenden Unterseite des Sattelaufliegers angeordnet ist, wobei eine Schmutzdeckelvorrichtung an der Unterseite des Sattelaufliegers anliegend und drehbar um den Königszapfen angeordnet ist, diese einen Schmutzdeckel zur Abdeckung der im Königszapfen vorgesehenen Bohrung aufweist und der Schmutzdeckel beim Kuppelvorgang von einer die Bohrung im Königszapfen abdeckenden Grundstellung in eine die Bohrung freigebenden Kuppelstellung verschiebbar an der Schmutzdeckelvorrichtung ausgebildet ist. Ferner betrifft die Erfindung eine Schmutzdeckelvorrichtung für diese Anordnung.

Im Straßengüterverkehr hat sich der Transport von Waren mit sogenannten Sattelzügen durchgesetzt. Dabei handelt es sich um ein Gespann aus einem Zugfahrzeug mit einer Sattelplatte und einem auf der Sattelplatte des Zugfahrzeugs mit einem Teil seines Gewichts aufliegenden Sattelauflieger, der das Transportgut aufnimmt. Die Verbindung zwischen Zugfahrzeug und Sattelauflieger wird über eine sogenannte Sattelkupplung erreicht. Dafür ist am Sattelauflieger ein Königszapfen orthogonal nach unten zeigend an der als Gegenlager zur Sattelplatte des Zugfahrzeugs dienenden Unterseite des Sattelaufliegers angeordnet. Da die Sattelkupplung somit auf der zur Straße gewandten Unterseite des Sattelaufliegers meist unmittelbar über der bzw. den Hinterachsen der Zugmaschine angeordnet ist, ist die Sattelkupplung starker Verschmutzung ausgesetzt.

Ferner gibt es neuere Entwicklungen zur Automatisierung der Sattelkupplung, insbesondere zur automatischen Verbindung der elektrischen Leitungen sowie der Bremsluftleitungen zum Sattelauflieger, die beispielsweise eine gesonderte Steckerkonsole für einen Auflieger eines Sattelzuges umfassen, die um ein Lager schwenkbares Tragelement und einen in dem Tragelement angeordneten Stecker aufweisen, wobei diese Steckerkonsole um die durch den Königszapfen definierte Achse schwenkbar ist, wie in DE 1 655 977 A1,

DE 10 2006 033 899 A1 oder DE 10 2008 001 349 A1 beschrieben. Entsprechend kann eine zur Steckerkonsole passende Steckdosenanordnung am mit Sattelkupplung versehenen Zugfahrzeug vorgesehen sein, die beim Kuppelvorgang in die Steckerkonsole des Sattelaufliegers einkuppeln kann.

Alternativ gibt es eine automatisierte Sattelkupplung, die bei der mechanischen Verrastung der an der Sattelplatte angeordneten Klauen zur Umgreifung des Königszapfens über entsprechende Hubstecker in einer axialen Bohrung im Königszapfen eingreifen, wie in der EP 1 240 067 B1 beschrieben. Sobald der Sattelauflieger mit einem hohl gebohrten Königszapfen in einer entsprechenden automatischen Kupplung gekuppelt ist, ist ein Schmutzeintritt in das empfindliche Innere dieser zusätzlichen Kontaktierung für elektrische Leiter und Bremsluft ausgeschlossen. Jedoch kann ein entsprechender Sattelauflieger im nicht gekuppelten Zustand, beispielsweise bei seiner Abstellung verschmutzen. Eine deutlich stärkere Verschmutzung ist bei einer Kupplung eines solcher Art vorbereiteten Sattelaufliegers mit einer Zugmaschine ohne automatischem Kupplungssystem anzunehmen, da die Hohlbohrung mit den darin befindlichen empfindlichen Kontakten für Umwelteinflüsse frei zugänglich ist. Insbesondere für den zweiten Fall bei einer Kupplung an einer Zugmaschine ohne automatischer Verbindung der elektrischen und pneumatischen Leitungen würde zudem das Aufwirbeln von Schmutz etc. während des Fahrbetriebs erheblich zur Verschmutzung auch gerade der Hohlbohrung des Königszapfens des Sattelaufliegers beitragen.

Daher wurde vom gleichen Erfinder bereits eine Schmutzdeckelanordnung in der DE 20 2017 101 339 U vorgeschlagen. Diese Schmutzdeckelanordnung zeichnet sich dadurch aus, dass eine Schmutzdeckelvorrichtung an der Unterseite des Sattelaufliegers anliegend und drehbar um den Königszapfen angeordnet ist, wobei diese einen Schmutzdeckel zur Abdeckung der darin vorgesehenen Bohrung aufweist und der Schmutzdeckel beim Kuppelvorgang von einer die Bohrung im Königszapfen abdeckenden Grundstellung in eine die Bohrung freigebenden Kuppelstellung verschiebbar an der Schmutzdeckelvorrichtung ausgebildet ist. Die Bohrung im Königszapfen wird somit durch den Schmutzdeckel im ungekuppelten Zustand des Sattelaufliegers geschützt, wobei der Schmutzdeckel automatisch beim Kuppelvorgang die Bohrung im Königszapfen zur Kupplung der darin aufgenommenen elektrischen und pneumatischen Verbindungen freigibt. Wird der Auflieger mit Schmutzdeckelvorrichtung an einem Zugfahrzeug ohne automatische Sattelkupplung gekuppelt, verbleibt der Schmutzdeckel in seiner Schutzstellung, die Bohrung im Königszapfen abdeckend. Folglich kann dann während der Fahrt aufgewirbelter Schmutz nicht in die Bohrung und damit die empfindlichen Kontakte etc. des Königzapfens eindringen. Dabei stört die Schmutzdeckelvorrichtung an der Unterseite des Sattelaufliegers durch seine Drehbarkeit um den Königszapfen nicht die Beweglichkeit der Sattelkupplung zwischen Zugfahrzeug und Sattelauflieger, unabhängig davon, ob das Zugfahrzeug mit einer automatischen Sattelkupplung ausgestattet ist oder nicht.

In besonderer Ausgestaltung wurde vorgeschlagen, die Schmutzdeckelvorrichtung direkt an dem der Unterseite des Sattelaufliegers naheliegenden Teil des Königszapfenkörpers in Führungsnuten drehbar zu verankern. Aufgrund von Festigkeitsproblemen für den im Fahrbetrieb und insbesondere bei Unfällen stark belasteten Königszapfen ist das Vorsehen einer Nut an dieser Stelle des Königszapfens nicht möglich.

Aufgabe der Erfindung ist es daher, die Schmutzdeckelanordnung bzw. die Schmutzdeckelvorrichtung für diese Anordnung gemäß DE 20 2017 101 339 U so weiter zu bilden, dass ohne tiefgreifende konstruktive Eingriffe in den Sattelauflieger und ohne Schwächung des Königszapfens eine sichere, drehbare Lagerung der Schmutzdeckelvorrichtung koaxial zum Königszapfen möglich ist.

Gelöst wird diese Aufgabe mit einer Schmutzdeckelanordnung gemäß Anspruch 1 und einer diesbezüglichen Schmutzdeckelvorrichtung.

Dadurch, dass zur um den Königszapfen drehbaren Lagerung der Schmutzdeckelvorrichtung eine kreisringförmige Lagerungsscheibe mit umlaufendem Lagersitz vorgesehen ist, die koaxial zum Königszapfen an der Unterseite des Sattelaufliegers befestigt ist, wird eine Befestigung der Schmutzdeckelvorrichtung im Bereich des Königszapfens an der Unterseite des Sattelaufliegers ermöglicht, bei der die Drehachse für die Schmutzdeckelvorrichtung koaxial zur Drehachse des Königszapfens liegt, ohne dass der Königszapfen geschwächt wird. Dabei weist der umlaufende Lagersitz an der kreisringförmigen Lagerungsscheibe an dessen innerer Kreisöffnung eine erste Gleitlagerkante und am äußeren Rand eine zweite Gleitlagerkante auf, in denen die Schmutzdeckelvorrichtung eingreift. Somit wird die Schmutzdeckelvorrichtung um den Königszapfen frei drehbar so aufgehängt, dass etwaige Kippmomente durch die möglichst breite Lagerungsbasis gut abgefangen werden.

Eine besonders einfache Befestigung der Schmutzdeckelvorrichtung am Sattelauflieger wird dadurch erreicht, dass der Königszapfen einen kreisscheibenförmigen Befestigungssockel mit ersten Befestigungsbohrungen hat, wobei die kreisringförmige Lagerungsscheibe zu den ersten Befestigungsbohrungen fluchtende zweite Befestigungsbohrungen aufweist, so dass der Königszapfen und die Schmutzdeckelvorrichtung mittels durch die ersten und zweiten Befestigungsbohrungen durchgreifende Befestigungsschrauben an der Unterseite des Sattelaufliegers befestigbar sind. Gegebenenfalls sind um die Materialstärke der Lagerungsscheibe längere Befestigungsschrauben zu verwenden.

Wenn der Königszapfen einen zylinderischen, nach unten von der Unterseite des Sattelaufliegers vorstehenden Königszapfenkörper hat, wobei die Schmutzdeckelvorrichtung eine zum Königszapfenkörper gerichtete und daran anliegende Gleitfläche aufweist, erfolgt auch eine Abstützung der Schmutzdeckelvorrichtung direkt am Königszapfen, womit etwaige Kippmomente optimal abgeleitet werden.

Um das Öffnen und Schließen des Schmutzdeckels zuverlässig bewerkstelligen zu können, weist die Schmutzdeckelvorrichtung zum Verschieben des Schmutzdeckels eine Lateralführung mit einem Schubelement auf, wobei das Schubelement in zum Königszapfen radialer Richtung, parallel zur Unterseite des Sattelaufliegers bewegbar ausgebildet ist und mit dem Schmutzdeckel gekoppelt ist.

Bevorzugt ist an dem Schubelement ein Mitnehmer vorgesehen, der beim Kuppelvorgang von einem an der Sattelplatte vorgesehenen Betätigungsmittel des einkuppelnden Zugfahrzeugs mitnehmbar ausgebildet ist, wobei nur Zugfahrzeuge mit automatischer Sattelkupplung dieses Betätigungsmittel an der Sattelplatte aufweisen. Bevorzugt ist das Betätigungsmittel an der Sattelplatte ein den Einführungsschlitz überbrückender Niederhalter, dessen Einbaulage ein freies Durchrutschen des Königszapfens im Einführungsschlitz erlaubt und der mit dem Mitnehmer zusammenwirkt, sodass der Niederhalter beim Kuppelvorgang den Mitnehmer und damit den Schmutzdeckel in die die Bohrung freigebende Kuppelstellung verschiebt und in dieser Stellung gegen den Druck der ersten Feder festhält. Damit ist in mechanisch einfacher Weise gelöst, dass beim Annähern der Sattelplatte des Zugfahrzeugs an den Königszapfen das Schubelement und damit der Deckel lateral verschoben wird, wenn das Zugfahrzeug ein Betätigungsmittel aufweist, also eine automatische Sattelkupplung hat. Anderenfalls verbleibt der Schmutzdeckel auf dem Königszapfen in seiner Grundstellung.

Um ein sicheres Wiederverschließen der Schmutzdeckelvorrichtung nach dem Abkoppeln des Zugfahrzeugs vom Sattelauflieger zu gewährleisten, ist in der Lateralführung eine erste Feder vorgesehen, die das Schubelement in Richtung der die Bohrung im Königszapfen abdeckenden Grundstellung von der ersten Feder vorbelastet hält.

An dem Schubelement kann eine zweite Feder vorgesehen sein, die den Schmutzdeckel von dieser zweiten Feder belastet in axialer Richtung auf die freie Stirnseite des Königszapfens hält. Damit wird über diese zweite Feder ein ausreichender Anpressdruck des Schmutzdeckels gerichtet auf die Stirnseite des Königszapfens sichergestellt. Zusätzlich kann die Innenseite des Schmutzdeckels eine dichtende, gummierte Beschichtung aufweisen, sodass ein Schmutzeintrag sowie weitgehend auch Feuchtigkeitseintrag in die Bohrung des Königszapfens ausgeschlossen ist.

Die Schmutzdeckelvorrichtung sollte eine Breite aufweisen, die kleiner als die Weite des Einführungsschlitzes der Sattelplatte ist. Damit passt die Schmutzdeckelvorrichtung zwischen den Einführungsschlitz der Sattelplatte, sodass die Bewegungsübertragung für den Schmutzdeckel möglichst kurz ausgestaltet werden kann. Ferner ist es bevorzugt, dass die Aufbauhöhe der Schmutzdeckelvorrichtung kleiner gleich die Höhe des Königszapfens ist. Dabei ist lediglich sicherzustellen, dass der Schmutzdeckel problemlos auf die Stirnfläche des Königszapfens auf- und abgleiten kann. Selbstverständlich kann es erforderlich sein, dass der Mitnehmer der Schmutzdeckelvorrichtung die vorangehend definierte maximale Breite und/oder maximale Höhe überschreitet, damit dieser beim Kuppelvorgang von der Sattelplatte oder einem daran angeordneten Element betätigt werden kann.

Damit sich die Schmutzdeckelvorrichtung beim Kuppelvorgang möglichst rasch im Einführungsschlitz der Sattelplatte zentriert, weist die

Schmutzdeckelvorrichtung in Einbausituation an ihren Seitenflanken beidseitig pfeilförmig abgespreizte Blattfedern auf.

Entscheidend ist, dass die Schmutzdeckelvorrichtung an einem Sattelauflieger an dessen Königszapfen, um diesen frei drehbar, angeordnet ist. Entsprechend können derartige Sattelauflieger von Zugmaschinen mit Sattelplatte in der üblichen Weise angekuppelt werden. Die um den Königszapfen verdrehbare Schmutzdeckelvorrichtung stört weder den Kuppelvorgang noch die freie Drehbarkeit der Sattelplattenverbindung, bildet somit keine Einschränkung der Funktionsfähigkeit des Sattelzuges.

Sollte das Zugfahrzeug keine automatische Sattelkupplung mit elektrischen und pneumatischen Kontakten über eine Steckverbindung in die Bohrung des Königszapfens haben, wird in diesem Fall die Sattelplatte der Zugmaschine (Zugfahrzeug) keinen Niederhalter aufweisen, sodass beim Kuppelvorgang an den Auflieger mit Schmutzdeckelvorrichtung der Schmutzdeckel nicht vom Königszapfen entfernt wird. Die Schutzfunktion des Schmutzdeckels bleibt also auch in Konfiguration mit mit einem "normalen" Zugfahrzeug gekuppelten Sattelauflieger voll erhalten. Nur wenn ein Zugfahrzeug mit Sattelplatte einen Niederhalter bzw. ein entsprechendes Bauteil zum Betätigen des Mitnehmers aufweist, wird beim Kuppelvorgang der Mitnehmer der Schmutzdeckelvorrichtung gegen die Kraft der ersten Feder lateral verschoben, sodass sich der Schmutzdeckel vom Königszapfen entfernt und die Bohrung im Königszapfen zum Verbinden der elektrischen und pneumatischen Kontakte freigibt.

Nachfolgend wird ein Ausführungsbeispiel der Erfindung anhand der beiliegenden Zeichnungen detailliert beschrieben.

Darin zeigt:
- Fig. 1: in räumlicher Darstellung eine Schmutzdeckelvorrichtung und
- Fig. 2: die in Fig. 1 dargestellte Schmutzdeckelvorrichtung in Seitenansicht mit Königszapfen und Sattelplatte.

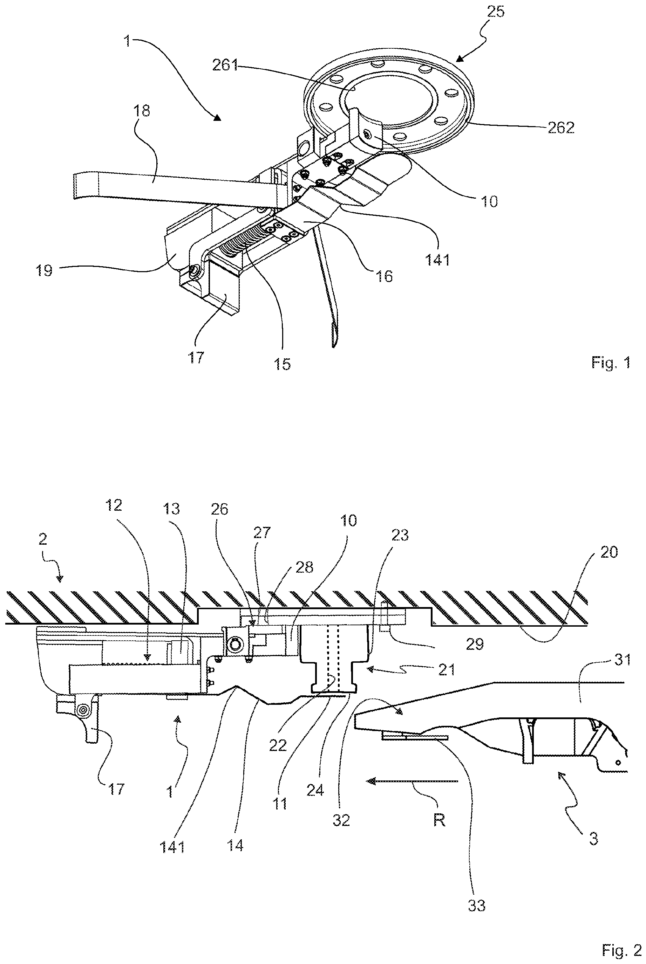

In Fig. 1 ist in räumlicher Ansicht eine Schmutzdeckelvorrichtung 1 dargestellt, die an einer Unterseite 20 eines Sattelaufliegers 2 zusammen mit einem dort vorgesehenen Königszapfen 21 befestigt ist. Die Gesamtsituation unmittelbar vor einem Kuppelvorgang ist in Fig. 2 in Seitenansicht dargestellt. Dort ist die Unterseite 20 des Sattelaufliegers 2 im Ausschnitt dargestellt. Im Zentrum ist der Königszapfen 21 mit seiner Symmetrieachse orthogonal nach unten erstreckend angeordnet. Im Ausführungsbeispiel gemäß Fig. 2 wird von rechts kommend eine Sattelplatte 31 als Bestandteil des an den Sattelauflieger 2 anzukuppelnden in Zugfahrzeuges 3 dargestellt. Bei weiterer Rückwärtsfahrt des Zugfahrzeuges 3 (in Fig. 2 nach links in Zeichenebene entsprechend Pfeil R) würde die Sattelplatte 31 mit dem Königszapfen 21 als Sattelkupplungsverbindung verrasten. Dabei wird der Königszapfen 21 von der Sattelplatte 31 in einem in der Sattelplatte 31 vorgesehenen Einführungsschlitz 32 aufgenommen und mittels beweglicher Klauen umschlossen und verriegelt und damit gekuppelt.

Am Königzapfen 21 ist eine Schmutzdeckelvorrichtung 1 um den Königszapfen 21 frei drehbar und an der Unterseite 20 des Sattelaufliegers 2 anliegend angeordnet. Die Schmutzdeckelvorrichtung 1 weist einen Schmutzdeckel 11 auf, der eine koaxiale Bohrung 22 im Königszapfen 21 an seiner unteren Stirnseite 24 überdeckt, wie es in Fig. 2 ersichtlich ist.

Die drehbare Halterung der Schmutzdeckelvorrichtung 1 an dem Königszapfen 21 ist dadurch gelöst, dass eine kreisringförmige Lagerungsscheibe 25 mit umlaufendem Lagersitz 26 vorgesehen ist, die koaxial zum Königszapfen 21 an der Unterseite 20 des Sattelaufliegers 2 befestigt ist. Die kreisringförmige Lagerungsscheibe 25 hat eine innere kreisförmige Öffnung durch die der Königszapfen 21 vorsteht. An der Lagerungsscheibe 25 ist eine erste Gleitlagerkante 261 als ersten Teil des Lagersitzes 26 und außenseitig am äußeren Rand der Lagerungsscheibe 25 eine zweite Gleitlagerkante 262 als zweiten Teil des Lagersitzes 26 ausgebildet.

Ferner weist die Lagerungsscheibe 25 zweite Befestigungsbohrungen 28 auf, die in gleicher Anzahl und Orientierung wie erste Befestigungsbohrungen 27 für den Königszapfen 21 zur gemeinsamen Befestigung an der Unterseite 20 des Sattelaufliegers 2 vorgesehen sind. Dafür sind Befestigungsschrauben 29 vorgesehen, die die ersten und zweiten Befestigungsbohrungen 27, 28, die untereinander fluchtend ausgebildet sind, durchgreifen.

In die erste und zweite Gleitlagerkante 261, 262 des Lagersitzes 26 der Lagerungsscheibe 25 greift die Schmutzdeckelvorrichtung 1 so ein, dass sie um die Mittenachse der Lagerungsscheibe 25 und somit gleichbedeutend um die Symmetrieachse des Königszapfens 21 drehbar unter der Unterseite 20 des Sattelaufliegers 2 gelagert ist. Durch die radial von der Mittenachse voneinander beabstandeten Gleitlagerkanten 261 und 262 wird ein an der Schmutzdeckelvorrichtung angreifendes Kippmoment in den Sattelauflieger geleitet. Die Schmutzdeckelvorrichtung 1 bleibt somit an der Unterseite 20 des Sattelaufliegers 2 anliegend oder nahezu anliegend gehaltert.

Um die Gewichtskraft der radial vom Königszapfen 21 abstehenden Schmutzdeckelvorrichtung 1 noch besser abstützen zu können, ist ferner an der zum vorstehenden Königszapfenkörper 23 gerichteten Seite der Schmutzdeckelvorrichtung 1 eine Gleitfläche 10 ausgebildet, die am zylindrischen Königszapfenkörper 23 gleitend anliegt und somit eine ergänzende Abstützung bildet.

Ferner weist die Schmutzdeckelvorrichtung 1 eine Lateralführung 12 auf, in der ein lateral verschiebbares Schubelement 13 geführt ist. An dem Schubelement 13 ist ein Verbindungselement 14 angebracht, das mit dem Schmutzdeckel 11 an seinem anderen Ende verbunden ist. Ferner ist am Schubelement 13 ein Mitnehmer 17 vorgesehen, der beim Kuppelvorgang von einem Bauteil des Zugfahrzeugs 3, insbesondere der Sattelplatte 31 mechanisch betätigbar ist. Das Schubelement 13 ist mit einer ersten Feder 15, die als Schraubendruckfeder ausgebildet ist, versehen, um den am Schubelement 13 über das Verbindungselement 14 verbundenen Schmutzdeckel 11 in der in Fig. 2 dargestellten, geschlossenen Stellung (Grundstellung) federbelastet vorzusehen. Des Weiteren ist eine zweite Feder 16 vorgesehen, die als Stahlbandfeder ausgestaltet ist, die den Schmutzdeckel 11 auf die Stirnseite 24 des Königszapfens 21 auflastet, um ein möglichst unmittelbares und damit weitgehend dichtes Aufliegen des Schmutzdeckels 11 auf der Stirnseite 24 des Königszapfens 11 zu erreichen.

Des Weiteren sind an der Schmutzdeckelvorrichtung 1 im Bereich der Lateralführung 12 in Einbauorientierung seitlich schräg nach hinten abgespreizt angeordnete Blattfedern 18 angeordnet, wie in Fig. 1 ersichtlich ist. Diese Blattfedern 18 wirken beim Kuppelvorgang mit dem zunächst sehr breiten Einführungsschlitz 32 der Sattelplatte 31 derart zusammen, dass die um den Königszapfen 21 frei drehbar angeordnete Schmutzdeckelvorrichtung 1 in zur Sattelplatte 31 zentraler Orientierung elastisch weich gehalten wird.

Nachfolgend wird der Kuppelvorgang bei einer wie vorangehend beschriebenen Schmutzdeckelanordnung näher beschrieben.

Die in Seitenansicht dargestellte Situation der Fig. 2 zeigt die Sattelplatte 31 des Zugfahrzeugs 3 in angeschnittener Seitenansicht. Ferner ist der Sattelauflieger 2 mit seiner Unterseite 20 und dem daran befestigten Königszapfen 21 und der mit dem Königszapfen 21 mittels der Lagerungsscheibe 25 drehbar befestigten Schmutzdeckelvorrichtung 1 dargestellt. In der Situation gemäß Fig. 2 befindet sich das Zugfahrzeug 3 in Ausgangsstellung vor Beginn des Kuppelvorgangs. Durch Rückwärtsfahrt, dargestellt durch Pfeil R, nähert sich die Sattelplatte 31 des Zugfahrzeugs 3 dem Königszapfen 21 des Sattelaufliegers 2.

Bei weiterer Rückwärtsfahrt gemäß Pfeil R wird der Königszapfen 21 von dem noch breit ausgebildeten Einführungsschlitz 32 der Sattelplatte 31 aufgenommen. Die Sattelplatte 31 weist einen Niederhalter 33 auf, der die beiden Schenkel der Sattelplatte 31 im Bereich des breiten Einführungsschlitzes 32 unterhalb der Höhenerstreckung des Königszapfens 21 überbrückt. Dieser Niederhalter 33 rutscht somit ungehindert über den Königszapfen 21 und die darum drehbar befestigte Schmutzdeckelvorrichtung 1 und gelangt mit dem Mitnehmer 17 des Schubelements 13 der Schmutzdeckelvorrichtung 1 in Kontakt.

Bei weiterer Rückwärtsfahrt R des Zugfahrzeugs 3 wird der Mitnehmer 17 und damit das Schubelement 13 gegen die Druckkraft der ersten Feder 15 lateral in Zeichenebene gemäß Fig. 2 nach links verschoben, sodass sich der Schmutzdeckel 11 über das Verbindungselement 14 mit dem Schubelement 13 nach links verschiebt. Bei dieser Bewegung bewegt der Niederhalter 33 den Mitnehmer 17 weiter in Zeichenrichtung links bis der Mitnehmer 17 seine Endposition erreicht und um eine Mitnehmerführung 19 herum angehoben wird, sodass der Niederhalter 33 über das Ende des Mitnehmers 17 hinwegrutschen kann. Dabei bleibt jedoch der Niederhalter 33 in der gekuppelten Stellung der Sattelkupplung unterhalb des Mitnehmers 17. Somit kann der Schmutzdeckel 11, der nun die Stirnseite 24 und damit die Bohrung 22 des Königszapfens 21 vollständig freigegeben hat, nicht in seine durch die erste Feder 15 belastete Grundstellung zurückrutschen.

Beim Abkuppeln läuft der gesamte Vorgang in umgekehrter Reihenfolge ab. Dabei wird darauf hingewiesen, dass durch Vorsehen einer Kröpfung 141 im Verbindungselement 14 der Schmutzdeckel 11 gegen die zweite Feder 16 (Stahlbandfeder) leicht angehoben und somit auf die Stirnfläche 24 des Königszapfens 21 aus seiner zurückgezogenen Stellung in die in Fig. 2 dargestellte Stellung angehoben und verschoben wird. Dabei erfolgt die Rückbewegung des Schubelements 13 mit dem daran befestigten Schmutzdeckel 11 durch Entspannen der ersten Feder 15.

### Bezugszeichenliste

- 1: Schmutzdeckelvorrichtung
- 10: Gleitfläche
- 11: Schmutzdeckel
- 12: Lateralführung
- 13: Schubelement
- 14: Verbindungselement
- 141: Kröpfung
- 15: erste Feder
- 16: zweite Feder
- 17: Mitnehmer
- 18: Blattfeder
- 19: Mitnehmerführung

- 2: Sattelauflieger
- 20: Unterseite
- 21: Königszapfen
- 22: Bohrung
- 23: Königszapfenkörper
- 24: Stirnseite
- 25: Lagerungsscheibe
- 26: Lagersitz
- 261: erste Gleitlagerkante
- 262: zweite Gleitlagerkante
- 27: erste Befestigungsbohrungen
- 28: zweite Befestigungsbohrungen
- 29: Befestigungsschrauben

- 3: Zugfahrzeug
- 31: Sattelplatte
- 32: Einführungsschlitz
- 33: Betätigungsmittel, Niederhalter

- R: Rückwärtsfahrt

## Patentansprüche

1. Schmutzdeckelanordnung mit einem Sattelauflieger (2) und einem Zugfahrzeug (3) und mit einem mit einer Bohrung (22) hohlgebohrten Königzapfen (21) zum Verschließen des für eine automatische Sattelkupplung mit einer Bohrung (22) hohlgebohrten Königszapfens (21), der an der als Gegenlager einer Sattelplatte (31) des Zugfahrzeugs (3) dienenden Unterseite (20) des Sattelaufliegers (2) angeordnet ist, wobei
- eine Schmutzdeckelvorrichtung (1) an der Unterseite (20) des Sattelaufliegers (2) anliegend und drehbar um den Königszapfen (21) angeordnet ist,
- diese Schmutzdeckelvorrichtung (1) einen Schmutzdeckel (11) zur Abdeckung der im Königszapfen (21) vorgesehenen Bohrung (22) aufweist und
- der Schmutzdeckel (11) beim Kuppelvorgang von einer die Bohrung (22) im Königszapfen (21) abdeckenden Grundstellung in eine die Bohrung (22) freigebenden Kuppelstellung verschiebbar an der Schmutzdeckelvorrichtung (1) ausgebildet ist, **dadurch gekennzeichnet, dass** zur um den Königszapfen (21) drehbaren Lagerung der Schmutzdeckelvorrichtung (1) eine kreisringförmige Lagerungsscheibe (25) mit umlaufendem Lagersitz (26) vorgesehen ist, die koaxial zum Königszapfen (21) an der Unterseite (20) des Sattelaufliegers (2) befestigt ist,wobei der umlaufende Lagersitz (26) an der kreisringförmigen Lagerungsscheibe (25) an dessen innerer Kreisöffnung eine erste Gleitlagerkante (261) und am äußeren Rand eine zweite Gleitlagerkante (262) aufweist, in denen die Schmutzdeckelvorrichtung (1) eingreift.

2. Schmutzdeckelanordnung nach Anspruch 1, **dadurch gekennzeichnet, dass** der Königszapfen (21) einen kreisscheibenförmigen Befestigungssockel mit ersten Befestigungsbohrungen (27) hat, wobei die kreisringförmige Lagerungsscheibe (25) zu den ersten Befestigungsbohrungen (27) fluchtende zweite Befestigungsbohrungen (28) aufweist, so dass der Königszapfen (21) und die Schmutzdeckelvorrichtung (1) mittels durch die ersten und zweiten Befestigungsbohrungen (27, 28) durchgreifende Befestigungsschrauben (29) an der Unterseite (20) des Sattelaufliegers (2) befestigbar sind.

3. Schmutzdeckelanordnung nach Anspruch 1 oder 2, **dadurch gekennzeichnet, dass** der Königszapfen (21) einen zylinderischen, nach unten von der Unterseite (20) des Sattelaufliegers (2) vorstehenden Königszapfenkörper (23) hat, wobei die Schmutzdeckelvorrichtung (1) eine zum Königszapfenkörper (23) gerichtete und daran anliegende Gleitfläche (10) aufweist.

4. Schmutzdeckelanordnung nach einem der vorangehenden Ansprüche, **dadurch gekennzeichnet, dass** die Schmutzdeckelvorrichtung (1) zum Verschieben des Schmutzdeckels (11) eine Lateralführung (12) mit einem Schubelement (13) aufweist, wobei das Schubelement (13) in zum Königszapfen (21) radialer Richtung, parallel zur Unterseite (20) des Sattelaufliegers (2) bewegbar ausgebildet ist und mit dem Schmutzdeckel (11) gekoppelt ist.

5. Schmutzdeckelanordnung nach Anspruch 4, **dadurch gekennzeichnet, dass** an dem Schubelement (13) ein Mitnehmer (17) vorgesehen ist, der beim Kuppelvorgang von einem an der Sattelplatte (31) vorgesehenen Betätigungsmittel (33) des einkuppelnden Zugfahrzeugs (3) mitnehmbar ausgebildet ist, wobei nur Zugfahrzeuge (3) mit automatischer Sattelkupplung dieses Betätigungsmittel (33) an der Sattelplatte (31) aufweisen.

6. Schmutzdeckelanordnung nach Anspruch 5, **dadurch gekennzeichnet, dass** das Betätigungsmittel (33) an der Sattelplatte (31) ein den Einführungsschlitz (32) überbrückender Niederhalter (33) ist, dessen Einbaulage ein freies Durchrutschen des Königszapfens (21) im Einführungsschlitz (32) erlaubt und der mit dem Mitnehmer (17) zusammenwirkt, sodass der Niederhalter (33) beim Kuppelvorgang den Mitnehmer (17) und damit den Schmutzdeckel (11) in die die Bohrung (22) freigebende Kuppelstellung verschiebt und in dieser Stellung gegen den Druck der ersten Feder (15) festhält.

7. Schmutzdeckelanordnung nach Anspruch 4, 5 oder 6, **dadurch gekennzeichnet, dass** in der Lateralführung (12) eine erste Feder (15) vorgesehen ist, die das Schubelement (13) in Richtung der die Bohrung (22) im Königszapfen (21) abdeckenden Grundstellung von der ersten Feder (15) vorbelastet hält.

8. Schmutzdeckelvorrichtung (1) für eine Schmutzdeckelanordnung nach einem der vorangehenden Ansprüche.

## Claims

1. A dirt cap arrangement, having a semitrailer (2) and a towing vehicle (3) and having a kingpin (21) hollowed out with a bore (22), for closing the kingpin (21), hollowed out with a bore (22), for an automatic fifth wheel coupling, which kingpin (21) is arranged at the underside (20), serving as a counter bearing of a fifth wheel plate (31) of the towing vehicle (3), of the semitrailer (2), wherein
- a dirt cap device (1) is arranged so as to rest against the underside (20) of the semitrailer (2) and so as to be rotatable about the kingpin (21),
- this dirt cap device (1) has a dirt cap (11) for covering the bore (22) provided in the kingpin (21) and
- the dirt cap (11) is designed at the dirt cap device (1) to be displaceable during the coupling procedure from an initial position covering the bore (22) in the kingpin (21) into a coupling position freeing the bore (22),
**characterized in that** for the rotatable mounting of the dirt cap device (1) about the kingpin (21) there is provided a mounting disc (25), in the form of a circular ring, with encircling bearing seat (26), which mounting disc (25) is secured to the underside (20) of the semitrailer (2) in a manner coaxial with the kingpin (21), wherein the encircling bearing seat (26) at the mounting disc (25) in the form of a circular ring has a first slide bearing edge (261) at its inner circular opening and a second slide bearing edge (262) at the outer edge, in which edges there engages the dirt cap device (1).

2. A dirt cap arrangement according to claim 1, **characterized in that** the kingpin (21) has a circular-disc-shaped mounting base with first securing bores (27), wherein the mounting disc (25) in the form of a circular ring has second securing bores (28) aligned with the first securing bores (27), so that the kingpin (21) and the dirt cap device (1) are securable to the underside (20) of the semitrailer (2) by means of securing screws (29) reaching through the first and second securing bores (27, 28).

3. A dirt cap arrangement according to claim 1 or 2, **characterized in that** the kingpin (21) has a cylindrical kingpin body (23) projecting downwards from the underside (20) of the semitrailer (2), wherein the dirt cap device (1) has a sliding surface (10) directed towards the kingpin body (23) and resting thereagainst.

4. A dirt cap arrangement according to any one of the preceding claims, **characterized in that** for displacement of the dirt cap (11), the dirt cap device (1) has a lateral guide (12) with a pusher element (13), wherein the pusher element (13) is movable in a direction radial to the kingpin (21) and parallel to the underside (20) of the semitrailer (2) and is coupled with the dirt cap (11).

5. A dirt cap arrangement according to claim 4, **characterized in that** an entrainer (17) is provided at the pusher element (13) and during the coupling procedure can be entrained by an actuating means (33), provided at the fifth wheel plate (31), of the towing vehicle (3) to be coupled, wherein only towing vehicles (3) with automatic fifth wheel coupling have this actuating means (33) at the fifth wheel plate (31).

6. A dirt cap arrangement according to claim 5, **characterized in that** the actuating means (33) at the fifth wheel plate (31) is a holding-down device (33), bridging the insertion slot (32), whose installation position permits free through-sliding of the kingpin (21) in the insertion slot (32) and which cooperates with the entrainer (17), so that during the coupling procedure the holding-down device (33) displaces the entrainer (17) and thereby the dirt cap (11) into the coupling position freeing the bore (22) and holds them in this position against the pressure of the first spring (15).

7. A dirt cap arrangement according to claim 4, 5 or 6, **characterized in that** a first spring (15) is provided in the lateral guide (12) and keeps the pusher element (13) preloaded in the direction of the initial position, covering the bore (22) in the kingpin (21), by the first spring (15).

8. A dirt cap device (1) for a dirt cap arrangement according to any one of the preceding claims.

## Revendications

1. Agencement de couvercle de protection contre les salissures avec une semi-remorque (2) et un véhicule tracteur (3), et avec un pivot d'attelage (21) percé d'un alésage (22), pour fermer le pivot d'attelage (21) percé d'un alésage (22) pour un attelage automatique, lequel pivot d'attelage est disposé sur la face inférieure (20) de la semi-remorque (2) servant de contre-palier pour une sellette d'attelage (31) du véhicule tracteur (3),
- un dispositif de couvercle de protection contre les salissures (1) étant disposé en appui contre la face inférieure (20) de la semi-remorque (2) et pouvant tourner autour du pivot d'attelage (21),
- ce dispositif de couvercle de protection contre les salissures (1) étant muni d'un couvercle de protection contre les salissures (11) pour recouvrir l'alésage (22) prévu dans le pivot d'attelage (21) et
- le couvercle de protection contre les salissures (11) étant conçu pour être déplacé sur le dispositif de couvercle de protection contre les salissures (1) lors de l'opération d'attelage d'une position de base recouvrant l'alésage (22) dans le pivot d'attelage (21) à une position d'attelage libérant l'alésage (22),
**caractérisé en ce que** pour le montage du dispositif de couvercle de protection contre les salissures (1) de façon rotative autour du pivot d'attelage (21), il est prévu un disque de palier (25) en forme d'anneau circulaire avec un siège de palier périphérique (26), lequel disque de palier est fixé sur la face inférieure (20) de la semi-remorque (2) de façon coaxiale au pivot d'attelage (21), le siège de palier périphérique (26) sur le disque de palier (25) en forme d'anneau circulaire présentant, sur son ouverture circulaire intérieure, une première arête de palier lisse (261) et, sur le bord extérieur, une deuxième arête de palier lisse (262) dans lesquelles s'engage le dispositif couvercle de protection contre les salissures (1).

2. Agencement de couvercle de protection contre les salissures selon la revendication 1, **caractérisé en ce que** le pivot d'attelage (21) a un socle de fixation en forme de disque circulaire avec des premiers trous de fixation (27), le disque de palier (25) en forme d'anneau circulaire présentant des deuxièmes trous de fixation (28) alignés avec les premiers trous de fixation (27), de sorte que le pivot d'attelage (21) et le dispositif de couvercle de protection contre les salissures (1) peuvent être fixés sur la face inférieure (20) de la semi-remorque (2) au moyen de vis de fixation (29) traversant les premiers et les deuxièmes trous de fixation (27, 28).

3. Agencement de couvercle de protection contre les salissures selon la revendication 1 ou 2, **caractérisé en ce que** le pivot d'attelage (21) a un corps de pivot d'attelage (23) cylindrique saillant vers le bas depuis la face inférieure (20) de la semi-remorque (2), le dispositif de couvercle de protection contre les salissures (1) étant muni d'une surface de glissement (10) dirigée vers le corps de pivot d'attelage (23) et s'appuyant contre celui-ci.

4. Agencement de couvercle de protection contre les salissures selon l'une des revendications précédentes, **caractérisé en ce que** le dispositif de couvercle de protection contre les salissures (1) est muni, pour le déplacement du couvercle de protection contre les salissures (11), d'un guide latéral (12) avec un élément de poussée (13), l'élément de poussée (13) étant conçu de manière à pouvoir se déplacer dans une direction radiale par rapport au pivot d'attelage (21), parallèlement à la face inférieure (20) de la semi-remorque (2), et étant couplé au couvercle de protection contre les salissures (11).

5. Agencement de couvercle de protection contre les salissures selon la revendication 4, **caractérisé en ce qu'**un entraîneur (17) est prévu sur l'élément de poussée (13), lequel entraîneur est conçu pour être entraîné, lors d'une opération d'attelage, par un moyen d'actionnement (33) prévu sur la sellette d'attelage (31) du véhicule tracteur (3) en cours d'attelage, seuls les véhicules tracteurs (3) à attelage automatique étant munis de ce moyen d'actionnement (33) sur la de sellette d'attelage (31).

6. Agencement de couvercle de protection contre les salissures selon la revendication 5, **caractérisé en ce que** le moyen d'actionnement (33) sur la sellette d'attelage (31) est un dispositif d'appui (33) qui enjambe la fente d'insertion (32), dont la position de montage permet un libre glissement du pivot d'attelage (21) dans la fente d'insertion (32) et qui coopère avec l'entraîneur (17) de telle sorte que, lors de l'opération d'attelage, le dispositif d'appui (33) déplace l'entraîneur (17) et donc le couvercle de protection contre les salissures (11) dans la position d'attelage en libérant l'alésage (22) et le maintient dans cette position contre la pression du premier ressort (15).

7. Agencement de couvercle de protection contre les salissures selon la revendication 4, 5 ou 6, **caractérisé en ce qu'**il est prévu dans le guidage latéral (12) un premier ressort (15) qui précontraint l'élément de poussée (13) par le premier ressort (15) en direction de la position de base recouvrant l'alésage (22) dans le pivot d'attelage (21).

8. Dispositif de couvercle de protection contre les salissures (1) pour un agencement de couvercle de protection contre les salissures selon l'une des revendications précédentes.
